# EUROPEAN PATENT APPLICATION

(11) **EP 2 770 744 A1**
(43) Date of publication of application: **27.08.2014**
(21) Application number: 13156784.4
(22) Date of filing: 26.02.2013
(51) Int. Cl.: H04Q 11/00, H04J 14/02

(54) **Method and apparatus for performing multicast transfer in an optical ring**

(71) Applicant: NTT DOCOMO, INC., Chiyoda-ku Tokyo (JP)
(72) Inventor: Wei, Qing, 80687 Munich (DE); Bazzi, Jamal, 80687 Munich (DE); Lott, Matthias, 80687 Munich (DE)
(74) Representative: Betten & Resch

(57) **Abstract**

A method for performing a multicast transfer of a packet from a source node to a plurality of destination nodes in a packet optical ring network topology, where each node has an associated wavelength at which it is is receiving packets, and wherein said packet comprises a control header and a payload, said method comprising: incorporating at said source node multicast chain information into said control header of said packet, said multicast chain information identifying said source node and said plurality of destination nodes thereby defining as said multicast chain a sequence of nodes to which said packet is to be sequentially transferred; transmitting said packet to the next node of said sequence of nodes which follows said source node using the wavelength of said next node; at each node of said sequence following said source node and in accordance with the order defined by said sequence performing the following: receiving said packet by said node and processing said control header to identify the subsequent node following said node according to said sequence of nodes; and if said processing results in a subsequent node being identified, transmitting said packet to said subsequent node using the wavelength of said subsequent node.

## Description

### FIELD OF THE INVENTION

The present invention relates to a method and an apparatus for performing a multicast transfer of a packet from a source node to a plurality of destination nodes in a packet optical ring network topology.

### BACKGROUND OF THE INVENTION

Multicast traffic for optical backhauling is becoming more attractive, especially because of Coordinated Multi-Point (CoMP) transmission which introduces huge multicast traffic into mobile backhaul (amount comparable to the downstream mobile traffic at each base station) and requires very short delay, according to 3GPP Technical Document No. R1-092311 "Consideration of backhaul technology evolution in support of CoMP", in the order of 1-5 ms. However, existing/traditional multicast solutions in optical packet switching ring topologies are not practical/cost efficient in real implementations. The need of an explicit multicast channel implies that each ring node needs to have one optical gate, e.g., a Semiconductor Optical Amplifier (SOA), and one transceiver (cost in range of thousands of Euros) for each multicast channel (wavelength). In addition, there is a need of complicated multicast channel access protocol (delay, processing). In particular, if one can assume in the future the necessity for nodes to join more than one multicast group the costs will increase even more in order to guarantee collision free multicast channel access, i.e., the current solutions based on existing/traditional multicast are by far not scalable.

Another problem is that reliability in multicast is difficult because each node in the multicast group needs to send individual ACK/NACK (Acknowledgement/Negative Acknowledgement) messages to the multicast source. This will cause congestion in the source node, large amount of processing in the source node and overhead of multiple ACK/NACK messages. In addition, aggregating the ACK/NACK information backwards in the multicast tree will add more complexity to the ACK/NACK transmitting scheduling, will require more processing at each intermediate node on the multicast tree, and hence introduce more delay.

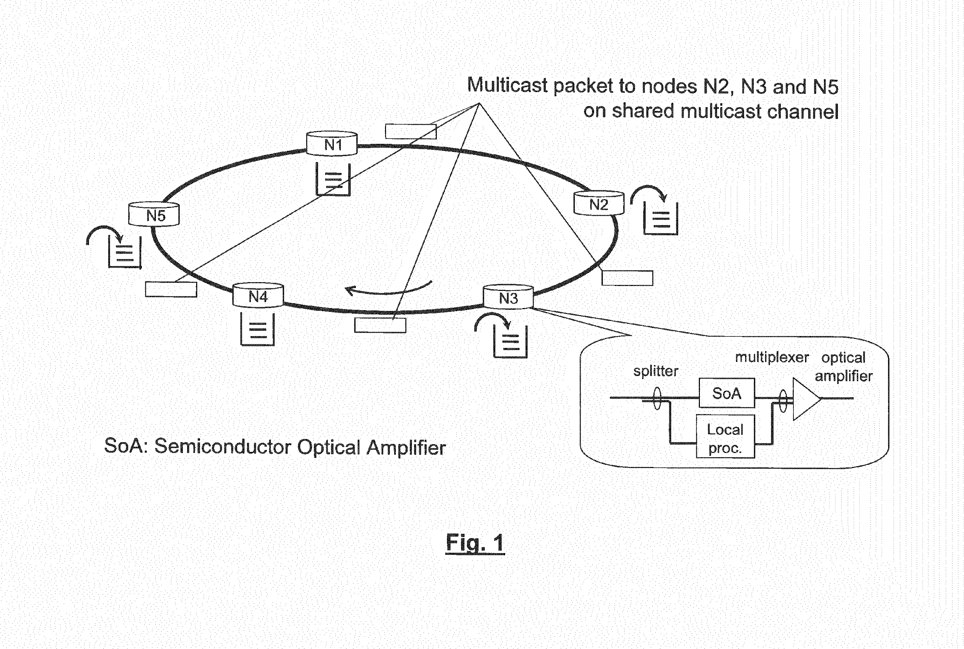

Theoretically, physical layer multicast is simple in an optical packet ring, e.g., by using a Packet Optical Add-Drop Multiplexer (POADM), as disclosed in D. Chiaroni et al., "Packet OADMS for the next generation of ring networks", Bell Lab. Technical Journal, 14, 4 (February 2010), pp. 265-283. In this approach, the source node puts multiple destinations (also referred to as multicast group) in the control header of the optical packet and sends the multicast packet on a shared multicast channel, i.e. on a channel using a dedicated wavelength for multicast transmission which is used by any node participating in the multicast transmission in addition to the wavelength which a node uses for unicast. Fig. 1 illustrates an optical ring network topology with 5 nodes N1 to N5. In the scenario that is illustrated in the figure, a multicast packet is to be transferred from node N1 (source node) to nodes N2, N3, and N5 (destination nodes). The packet is sent and received on the shared multicast channel and the destination nodes use an optical splitter to obtain a local copy of the optical packet. The optical multicast packet continues traveling to the other destinations.

### SUMMARY OF THE INVENTION

According to one embodiment, there is provided a method for performing a multicast transfer of a packet from a source node to a plurality of destination nodes in a packet optical ring network topology, where each node has an associated wavelength at which it is receiving packets, and wherein said packet comprises a control header and a payload, said method comprising:
incorporating at said source node multicast chain information into said control header of said packet, said multicast chain information identifying said source node and said plurality of destination nodes thereby defining as said multicast chain a sequence of nodes to which said packet is to be sequentially transferred;
transmitting said packet to the next node of said sequence of nodes which follows said source node using the wavelength of said next node;
at each node of said sequence following said source node and in accordance with the order defined by said sequence performing the following:
   receiving said packet by said node and processing said control header to identify the subsequent node following said node according to said sequence of nodes; and
   if said processing results in a subsequent node being identified, transmitting said packet to said subsequent node using the wavelength of said subsequent node.

Thereby, the method uses the unicast feature to realize multicast, while having the same bandwidth reduction like multicast compared to pure unicast. The hardware complexity is thus reduced, compared to approaches that implement multicast using a shared optical multicast channel. Moreover, the Media Access Control (MAC) layer design is simplified, e.g., by avoiding collisions and thus improving quality of service (QoS) by using unicast channels instead of shared multicast channels.

According to one embodiment, the step of processing the control header of said received packet comprises delaying the packet to allow for processing the control header, and the step of transmitting the packet to the subsequent node using the wavelength of said subsequent node comprises performing a wavelength conversion to convert the wavelength of the received packet to the wavelength of said subsequent node.

Thereby, the processing is limited to the control header of the packet, increasing efficiency, whereas the payload of the packet goes through an optical delay line and a subsequent wavelength converter, which efficiently performs a wavelength conversion of the received packet to the wavelength of said subsequent node.

According to one embodiment, the step of processing said control header of said received packet comprises:
converting the packet from its optical to an electrical representation and buffering of the resulting packet its electrical representation, and
generating an optical representation of said packet based on said buffered electrical representation of said packet and transmitting said optical representation of said packet to said subsequent node using the wavelength of said subsequent node, preferably with high priority.

Thereby, the hardware design is simplified, since conversion from an optical to an electrical representation may be performed using existing hardware, such as a conventional optical add-drop multiplexer (OADM) device, and does not require a separate wavelength converter. The transmission of multicast packets at high priority may reduce the overall delay of the multicast transmission if other packets are to be transmitted by the node at the same time.

According to one embodiment, the step of processing the control header comprises removing the identification of the node where the processing is performed from the multicast chain defined in the control header.

Thereby, the length of the control header and thus the length of the packet can be reduced, thus reducing the overhead of transmission and the overhead of processing at subsequent nodes in the multicast chain.

According to one embodiment, there is provided a method for performing a multicast transfer of a packet from a source node to a plurality of destination nodes in a packet optical ring network topology, wherein an ACK message is sent only if the last node in said sequence of nodes has correctly received said packet, said ACK message being sent from said last node of said sequence to said source node.

Thereby, upon receiving the ACK message, the source node can be aware that a multicast packet has been successfully received by all nodes in the multicast chain. The method is efficient, since only a single ACK message is transmitted, independent of the size of the multicast group.

According to one embodiment, there is provided a method for performing a multicast transfer of a packet from a source node to a plurality of destination nodes in a packet optical ring network topology, wherein, if a destination node in said sequence has not correctly received, a packet, a NACK message is sent from said destination node to said source node.

Thereby, the source node can be aware that a multicast packet has not been successfully received by a destination node and subsequent destination nodes specified in the multicast chain.

According to one embodiment, there is provided a method for performing a reliable multicast transfer of a packet from a source node to a plurality of destination nodes in a packet optical ring network topology, wherein, if a NACK message is received by said source node, said packet is transmitted again by said source node.

Thereby, the destination nodes are guaranteed to receive multicast packets transferred from a source node at least once. The combination of ACK and NACK messages is the basis for an efficient reliable multicast protocol.

According to one embodiment, there is provided a method for performing a reliable multicast transfer of a packet from a source node to a plurality of destination nodes in a packet optical ring network topology, wherein said packet, before being transmitted again, is modified by modifying the multicast chain such that destination nodes that have previously successfully received the packet are removed from the chain to thereby transmit the packet again to only to those nodes of said sequence which have not yet correctly received it.

Thereby, in case of loss or corruption of a multicast packet, the packet is selectively retransmitted, such that all destination nodes are guaranteed to receive a multicast packet transferred from a source node exactly once. Such reliable multicast protocol is efficient, since it is designed to transfer only a single ACK message after successful reception of a multicast packet by all destination nodes and only a single NACK message per retransmission of a broadcast packet.

According to one embodiment, there is provided a method for performing a reliable multicast transfer of a packet from a source node to a plurality of destination nodes in a packet optical ring network topology, wherein, if an ACK message is not received at said source node within a timeout period, said packet is transmitted again.

Thereby, the multicast protocol can be reliable even in the case of loss or corruption of ACK/NACK messages.

According to one embodiment, there is provided a method for performing a reliable multicast transfer of a packet from a source node to a plurality of destination nodes in a packet optical ring network topology, wherein said packet is removed from said optical ring network by the last node of said sequence of nodes, preferably after successful receipt of the packet, and/or said packet is removed from said optical ring network by a destination node of said sequence of nodes if said packet is not received correctly at said destination node.

Thereby, multicast packets that have been received by all destination nodes or multicast packets that are corrupted do not further draw load on the network.

According to one embodiment, there is provided an apparatus for performing a multicast transfer of a packet from a source node to a plurality of destination nodes in a packet optical ring network topology where each node has an associated wavelength at which it is receiving packets, and wherein said packet comprises a control header and a payload, said apparatus comprising:
a module for incorporating at said source node multicast chain information into said control header of said packet, said multicast chain information identifying said source node and said plurality of destination nodes thereby defining as said multicast chain a sequence of nodes to which said packet is to be sequentially transferred;
a module for transmitting said packet to the next node of said sequence of nodes which follows said source node using the wavelength of said next node;
a module for, at each node of said sequence following said source node and in accordance with the order defined by said sequence, performing the following: receiving said packet by said node and processing said control header to identify the subsequent node following said node according to said sequence of nodes; and if said processing results in a subsequent node being identified, transmitting said packet to said subsequent node using the wavelength of said subsequent node.

In this manner an apparatus or system for performing a multicast transfer can be implemented.

According to one embodiment, there is provided a source node for performing a multicast transfer of a packet to a plurality of destination nodes in a packet optical ring network topology, where each node has an associated wavelength at which it is receiving packets, and wherein said packet comprises a control header and a payload, said source node comprising:
a module for incorporating at said source node multicast chain information into said control header of said packet, said multicast chain information identifying said source node and said plurality of destination nodes thereby defining as said multicast chain a sequence of nodes to which said packet is to be sequentially transferred;
a module for transmitting said packet to the next node of said sequence of nodes which follows said source node using the wavelength of said next node, to thereby enable the nodes of said sequence following said source node to respectively receive the packet, process the header to identify the subsequent node and transmit it to the identified subsequent node using the wavelength of said subsequent node.

In this manner a source node for performing a multicast transfer can be implemented.

According to one embodiment, there is provided a node for participating a multicast transfer of a packet to a plurality of destination nodes, in a packet optical ring network topology, where each node has an associated wavelength at which it is receiving packets, and wherein said packet comprises a control header and a payload, said node being one of said destination nodes and comprising:
a module for receiving said packet by said node from its preceding node in said sequence, said packet having incorporated multicast chain information into its control header, said multicast chain information identifying said source node and
said plurality of destination nodes thereby defining as said multicast chain a sequence of nodes to which said packet is to be sequentially transferred;
a module for processing said control header to identify the subsequent node following said node according to said sequence of nodes; and
if said processing results in a subsequent node being identified, transmitting said packet to said subsequent node using the wavelength of said subsequent node.

In this manner a node for participating in a multicast transfer can be implemented.

According to one embodiment, there is provided an apparatus further comprising: a module for carrying out a method according to one of the previously described embodiments.

According to one embodiment, there is provided computer program comprising computer program code for enabling said computer to perform a method according to one of the previously described embodiments.

### DESCRIPTION OF THE DRAWINGS

Fig. 1 illustrates the principles of physical layer multicast using a shared multicast channel in an optical packet ring according to prior art.
Fig. 2 illustrates the principles of using unicast features to realize multicast, without the necessity of additional multicast channels according to one embodiment.
Fig. 3 illustrates the scenario of a mobile backhaul access network used for simulations of Coordinated Multi-Point (CoMP) traffic on a ring of 7 nodes.
Fig. 4 shows the analysis results of simulations of Coordinated Multi-Point (CoMP) traffic on a ring of 7, 19, and 37 nodes, in particular comparing the bandwidth utilization of three different packet transfer methods, namely unicast, physical layer multicast, and the multicast over Optical Packets Switched Ring (MOPS) method, the latter according to one embodiment.
Fig. 5 shows a summary of the comparison of the three different packet transfer methods.
Fig. 6 illustrates a multicast chain in the control header of a multicast packet.
Fig. 7 illustrates a node structure with direct wavelength conversion.
Fig. 8 shows the node structure with conventional packet Optical Add-drop Multiplexer (OADM) hardware.
Fig. 9 illustrates the modification of a multicast chain in the control header of a multicast packet in the case of a retransmission after reception of a NACK message.

### DETAILED DESCRIPTION

According to one embodiment there is provided a method for performing a multicast transfer of a packet from a source node to a plurality of destination nodes in a packet optical ring network topology. Each node has an associated wavelength at which it is receiving (unicast) packets sent to this node. A packet transmitted in the network comprises a control header and a payload.

Based on such a configuration, according to one embodiment there is implemented a multicast transmission as follows.

At the source node of the multicast transmission multicast chain information is incorporated into the control header of the packet. The multicast chain information identifies the source node and a plurality of destination nodes (e.g. by their respective node IDs). Thereby there is defined - as the multicast chain - a sequence of nodes (e.g. by their IDs) to which the packet is to be sequentially transferred.

Then the packet is transmitted to the next node of the sequence of nodes which follows the source node using the wavelength of said next node. At this next node of the sequence following said source node (and also on each further subsequent node) there is then performed the following:
Receiving the packet by the (next) node and processing the control header to identify the subsequent node following said (next) node according to the sequence of nodes; and
if the processing results in a subsequent node being identified (by said next node), transmitting said packet to said subsequent node using the wavelength of said subsequent node.

This means that there is performed an iterative process, starting with the source node, which comprises to send the packet to the next node of the multicast chain using the wavelength of the next node, processing the control header by the next node to identify a possible further, subsequent node which is specified in the multicast chain, and if such a further, subsequent node is identified, transmitting the packet to the further, subsequent node using the wavelength of the subsequent node.

This approach using a unicast feature (the individual wavelength of each node used for unicast transmission) and the special configuration of the header (with its multicast chain) to implement a multicast transmission using unicast features without the need for a specific multicast wavelength, thereby enabling a particularly efficient approach for multicast transmission in optical ring networks.

It should be noted that in one embodiment the order of the sequence of nodes in the multicast-chain is the same as the order of the sequence of nodes in the optical ring network topology. This makes it particularly easy to identify the sequence of nodes to which the packet is to be transmitted along the optical ring network.

Assuming that there are six nodes having the IDs 1 to 6, a multicast chain defining node 1 as the source and nodes 2, 3 and 5 as destination nodes therefore would contain the destination nodes in the order (2, 3, 5).

However, according to one embodiment the order of the destination nodes in the multicast chain does not need to coincide with the order in which the nodes are located along the ring network. E.g. the multicast chain in this example may contain the destination nodes in the order (3, 2, 5). Still, even such a multicast chain would define a sequence of nodes along which the packed is to be transferred in accordance with the network topology, because from the ring network topology still it is clear that if the source node is node 1 and the destination nodes are the nodes 3, 2, and 5, then the packed must travel along the path 2, 3, 5 because of the network topology.

Therefore, the sequence of nodes which defines the multicast chain still defines "a sequence of nodes to which said packet is to be sequentially transferred in accordance with said optical ring network topology", even if the order of the nodes in the multicast chain does not "directly" reflect the order of the nodes to which the packet is to be transmitted. As long as the nodes of the network are aware of the network topology, the order of the destination nodes in the multicast chain therefore may be "mixed" and does not need to follow their order in the network ring topology.

However, it should be mentioned that according to one embodiment the source node should be clearly identified, either by convention (e.g. as being the first node in the multicast chain) or by a specific identifier which identifies it as the source node. This is necessary in order to make sure that each (transit) node and also the final destination node knows where to send a NACK message or an ACK message, as will become more apparent from embodiments described below.

According to a further embodiment the packet travels along the ring network following the sequential order as defined by the multicast chain until each destination node has received the packet. If the order of nodes in the multicast chain does not coincide with the order of nodes in the ring topology this may require the packet to travel several times around the ring.

According to embodiments a practical Multicast approach over Optical Packet Switching (hereinafter referred to as MOPS) ring topology is disclosed. Based on the approach of the described embodiments a novel reliable multicast scheme can be realized. This approach uses the feature of POADM and the basic concept of store-and-forwarding. It facilitates the support for future mobile multicast applications, e.g., coordinated Multi-Point (CoMP) transmission, paging, Multimedia Broadcast Multicast Services (MBMS), in optical packet-switched networks and efficient reliable transmission applying automatic repeat request (ARQ) schemes for multicast.

In one embodiment unicast features are used to realize multicast; no additional multicast channels are needed. The source node of the multicast packet transmits the packet using the wavelength of the first node in the multicast group. When a node in the multicast group receives the packet, it reads the packet and retransmits said packet using the wavelength of the next node in the multicast group. For the multicast a new packet header is introduced and a respective protocol will take care of addressing all nodes in the multicast group appropriately.

It should be understood here that the term "retransmitting the packet" by an intermediate node which receives the packet and re-transmits it to a subsequent node does not necessarily mean that there is involved a step of "generating" or "re-generating" the packet electronically and "modulating" the packet onto some carrier. Instead, the term "transmission" or "re-transmission" may just mean that the node which retransmits it converts the wavelength to the wavelength of the subsequent node which is the next node to receive the packet according to the multicast chain. Therefore, the mechanism of retransmission in this embodiment actually merely comprises wavelength conversion of the packet rather than modulation of the packet onto a carrier. Nevertheless, this still is to be understood as being an act of "transmission", since the packet is "sent" or "transmitted" to a destination by this wavelength conversion.

In one embodiment, a reliable multicast transmission is achieved by having a single ACK/NACK for each multicast packet independent of the size of the multicast group. This will be explained later in further detail.

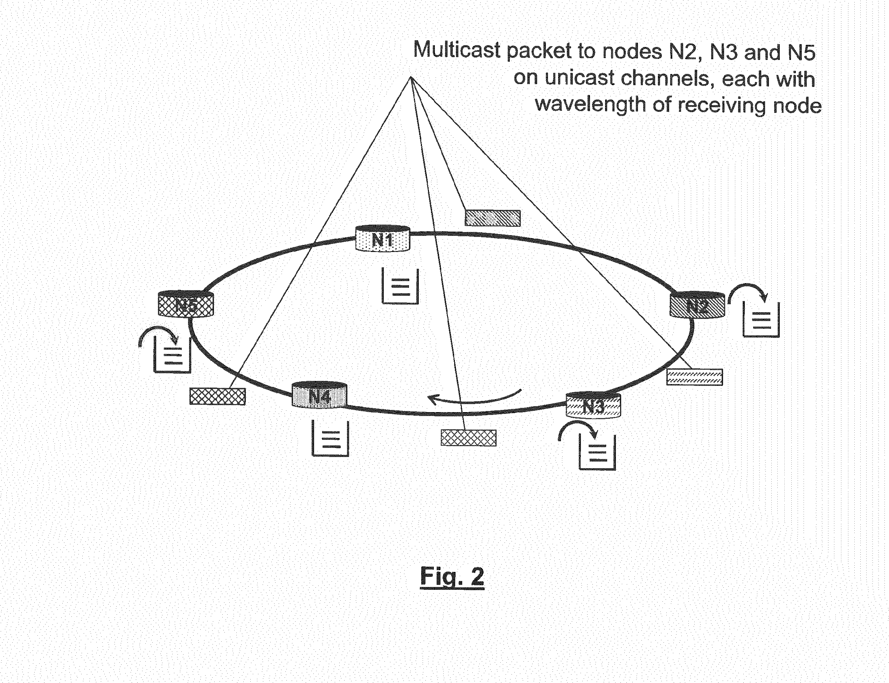

Fig. 2 illustrates an optical ring network topology with 5 nodes according to one embodiment. A node Ni has an associated wavelength λi at which it is receiving packets. In the scenario that is illustrated in the figure, a multicast packet is to be transferred from node N1 (source node) to nodes N2, N3, and N5 (destination nodes). Node N1 sends the multicast packet on a unicast channel using wavelength λ2; node N2 receives the packet and sends it out again on a unicast channel using wavelength λ3; node N3 receives the packet and sends it out again on a unicast channel using wavelength λ5; node N5 receives the packet.

Hardware complexity is reduced by using a unicast feature to realize multicast while having the same bandwidth reduction like multicast compared to pure unicast. The MAC layer design is simplified, e.g., by avoiding collisions and thus improving quality of service (QoS), by using unicast channels instead of shared multicast channels. The embodiment therefore supports an efficient realization of acknowledgement for multicast traffic.

In order to prove that the approach of the described embodiments is beneficial over other available solutions, simulations of Coordinated Multi-Point (CoMP) traffic have been performed and analyzed. CoMP, if used, can generate a huge amount of traffic (proportional to the S1 traffic: traffic between eNodeBs and the core network). In the simulations, rings with 7, 19 and 37 nodes have been used. It is understood that the described approach is a general method for performing multicast transfer in a packet optical ring network with a wide variety of applications and that it can be used for applications other than realizing CoMP traffic in backhaul networks.

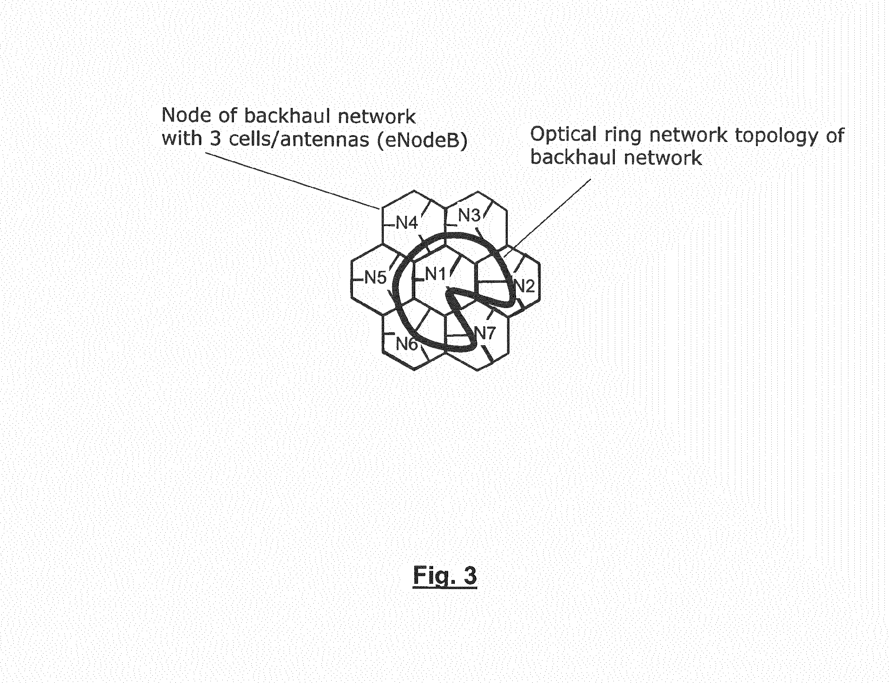

Fig. 3 illustrates the scenario of a mobile backhaul access network used for simulations of CoMP traffic of 7 nodes connected in a ring structure. Each node, i.e., enhanced NodeB (eNodeB), controls one site which is decomposed into 3 cells (i.e., 3 antennas). The CoMP architecture used is the 3 cells inter-site cooperation case.

In the evaluation it is shown that the bandwidth gain using the approach according to embodiments of the invention is the same as the gain with traditional multicast compared to the unicast case.

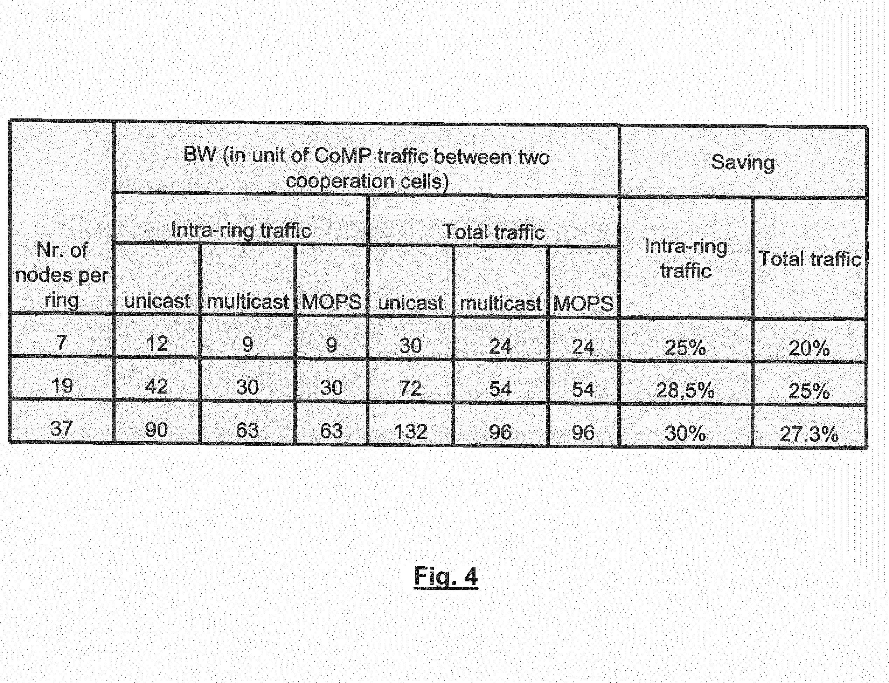

The table in Fig. 4 shows the bandwidth gain for both intra-ring traffic and total traffic, where intra-ring traffic is the CoMP traffic between collaborating nodes which are within the same ring, e.g. traffic between nodes N1, N4 and N5 collaborating in the segments in which they are neighboring. In addition to intra-ring traffic, the total traffic includes the outside traffic, or inter-ring traffic, which is between collaborating nodes in different rings, e.g. a segment of node N3, which is not neighboring any other segment of any other node in this ring, collaborating with other nodes in other rings (not shown in the figure). Both, the approach according to embodiments of the invention and the traditional multicast have the same bandwidth reduction compared to unicast. For 3 cells inter-site cooperation CoMP (the source node multicasts the traffic to two other nodes) bandwidth reduction is between 20% and 30%. Increasing the number of collaborating cells will result in higher bandwidth gain.

Looking at the hardware side, MOPS does not require additional hardware compared to the traditional multicast case. Based on traffic analysis by D. Chiaroni et al., "Packet OADMS for the next generation of ring networks", Bell Lab. Technical Journal, 14, 4 (February 2010), pp. 265-283, on the other hand the traditional multicast would require more optical transceivers and optical gates in each ring (additional 7 transceivers and 1 gate for 7 nodes ring and additional 22 transceivers and 2 gates for 19 nodes ring) which will dramatically increase the cost of each node compared to embodiments of the invention.

Delay is another important parameter to look at. Using the unicast case, the delay is twice the packet transmission time (transmit 2 separate packets for the other 2 nodes in the multicast group) in addition to the transport delay to the farthest node. In traditional multicast, the delay is one transmission time (transmit one packet for all the nodes using the multicast channel) and the transport delay to the farthest node. Using the approach according to embodiments of the invention, the delay can be almost as low as in the traditional multicast case; the processing time at the transit nodes is dominated by the control header processing time, which is about 100 ns in POADM according D. Chiaroni et al., "Packet OADMS for the next generation of ring networks", Bell Lab. Technical Journal, 14, 4 (February 2010), pp. 265-283, where the transit time of the optical packet can be ignored.

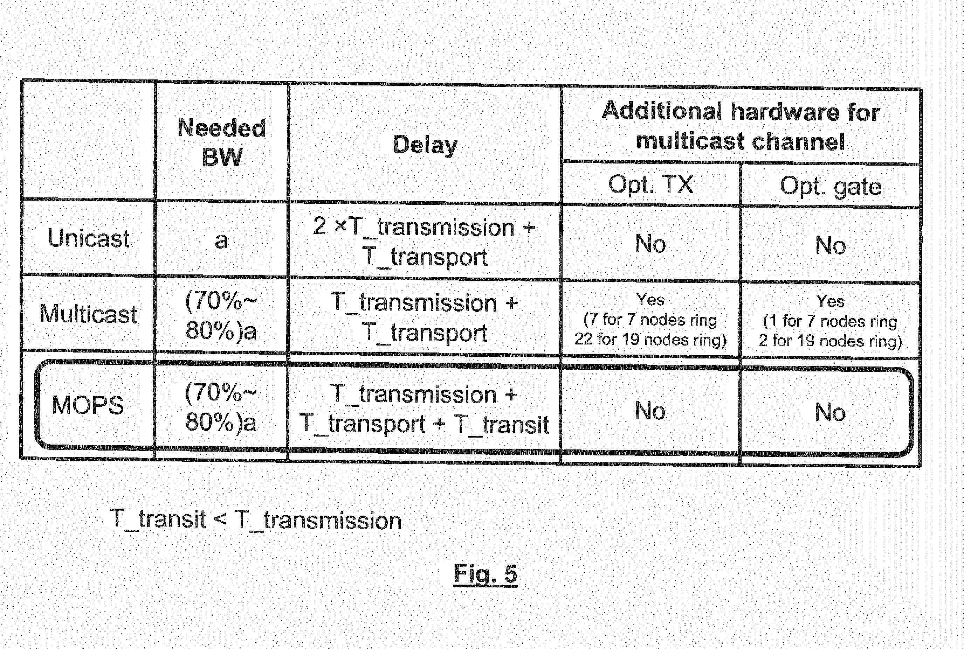

Fig. 5 summarizes the results of the comparison of the three different packet transfer methods: The approach according to embodiments of the invention has the same bandwidth gain as the traditional multicast; however it does not require any additional hardware, thus reducing the cost of each node. Furthermore, existing hardware could be easily made multicast-aware by simple software updates. Hence, the described approach would support flexibility and scalability by introducing multicast support on-demand and can be assumed to be a future-proven solution. The delay in the approach according to embodiments of the invention is comparable to the traditional multicast case and still much lower than in the unicast case.

According to one embodiment a new header of the optical packet is defined. A multicast chain needs to be added to the control header (or any header of the packet) by the source node. In this multicast chain, the source node puts its own address followed by the addresses of the nodes in the multicast group according to sequence of data flow through them.

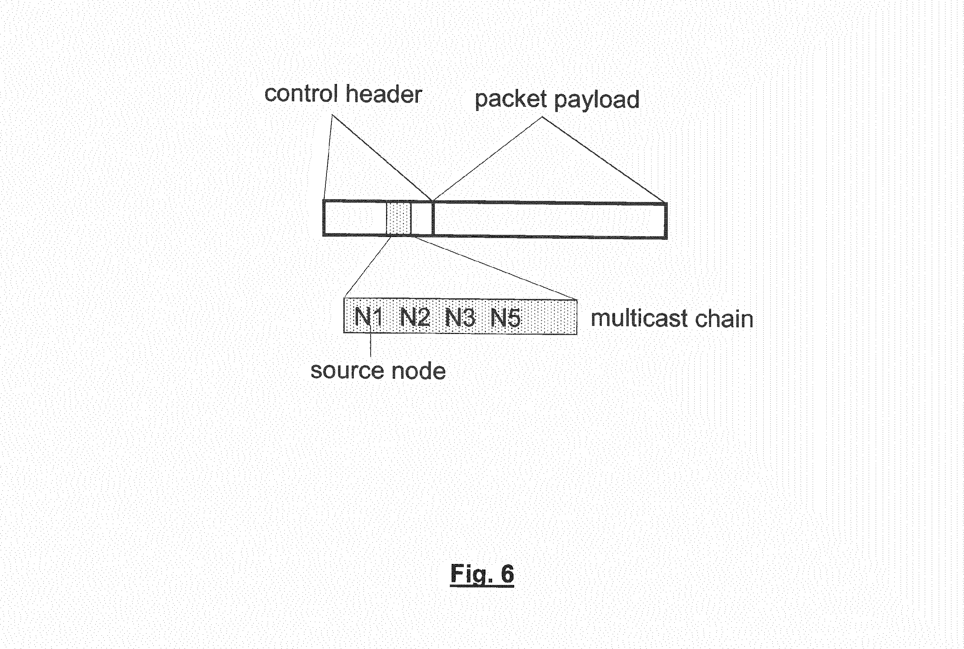

Fig. 6 illustrates the multicast chain in the control header for the case that node N1 is sending a multicast packet to nodes N2, N3 and N5 in a uni-directional ring.

The methods to transport the multicast packet are the following:
- The source node of a multicast packet performs the following steps:
   - Compose the multicast packet and include the multicast chain information in the control header (composes a multicast chain, preferably according to the sequence of the nodes in the ring).
   - Transmit the control header and multicast packet payload using the wavelength of the next node in the chain.
- The transit nodes of the multicast packet perform the following steps:
   - Interpret the control header.
   - Option 1: Direct wavelength conversion
      - Delay the optical packet to allow for the processing of the control header.
      - Convert the wavelength of the received optical packet to target wavelength on the fly.
   - Option 2: Buffer and transmit again
      - Convert the optical packet to electrical form and buffer it.
      - Transmit the multicast packet using the wavelength of the next node in the multicast chain with high priority.
- The last receiving node performs the following steps:
   - Store the packet locally and remove the multicast packet from the optical ring.

In one embodiment, a node may always forward optical packets to the next hop by default, wherein removing said packet from the ring means not to perform the default behavior for said packet and to refrain from transmitting said packet further on the ring.

According to some embodiments, which will be described in somewhat more detail below, a node which did not correctly receive a packet removes it from the ring in order to prevent it from continuing to travel along the network.

In one embodiment the transport of the control header of a packet occurs together with the payload of said packet in the same channel or in a separated synchronized control channel.

In the following two embodiments of the actual node structure are described:

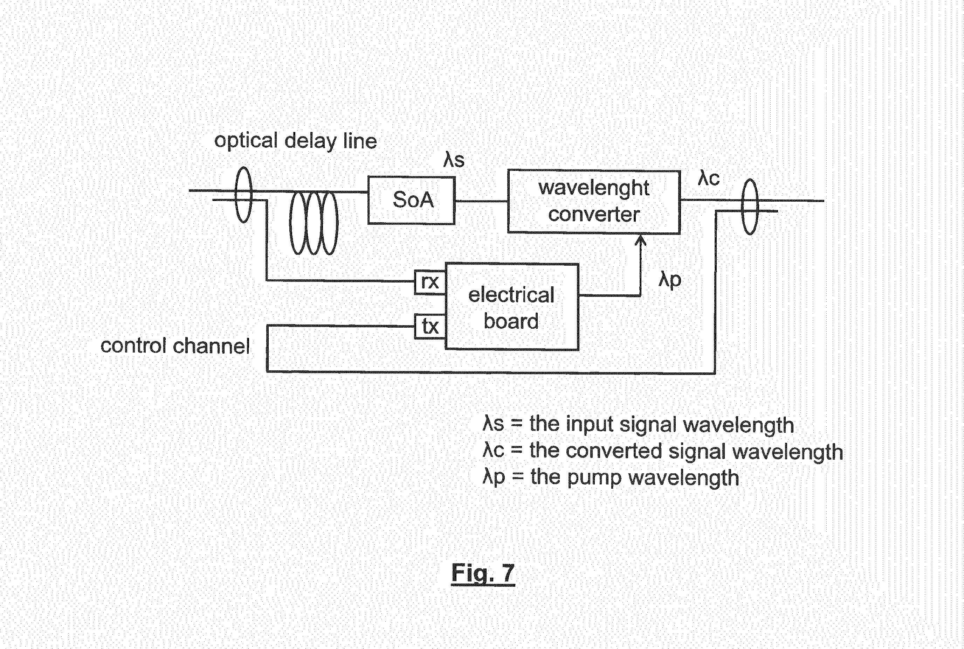

The first embodiment is using direct wavelength conversion. The control header of the optical packet is converted into electrical form and processed electrically to decode the multicast chain information. The payload of the optical packet goes through an optical delay line to allow for the processing of the control header of the optical packet. In addition, a wavelength converter is needed to convert the wavelength of transit the multicast packet to the receiving wavelength of the next hop in the multicast chain as shown in Fig. 7. The processed control header will be reconverted into an optical signal and joined together with the converted optical payload signal by optical coupler.

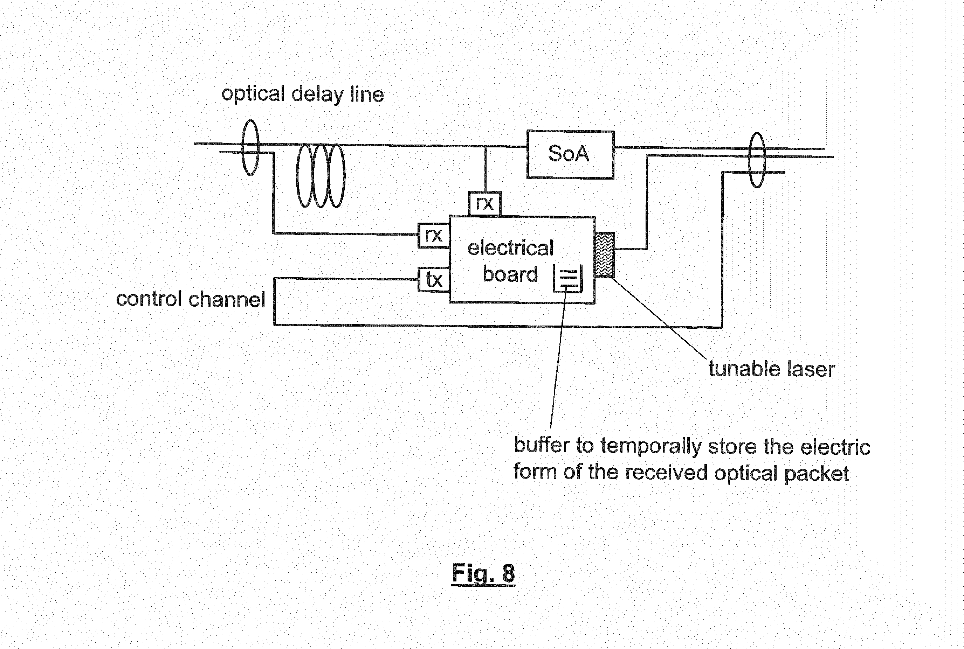

The second embodiment is using the existing hardware of a conventional packet OADM device, e.g. according D. Chiaroni et al., "Packet OADMS for the next generation of ring networks", Bell Lab. Technical Journal, 14, 4 (February 2010), pp. 265-283. As shown in Fig. 8, the control signal is processed in the same way as in the first option. The payload of the multicast optical packet is converted into the electrical form by the optical burst receiver, which is used to receive the optical packet in the normal case, and stored temporally in an electrical buffer. According to the interpretation of the control header, the tunable laser, which is used to transmit the optical packet in the normal case, will be tuned to the receiving wavelength of the next hop and transmits the transit multicast packet stored in the temporal buffer. This temporal buffer is different from the normal buffer, which is used for the queuing of electrical packets and optical packet encapsulation.

According to further embodiments a particularly reliable multicast may be implemented as will be described in the following. For that purpose, according to one embodiment the following additional steps may be added in the corresponding nodes:
- The source node of multicast packet performs in addition to the steps described above the following step:
   - When receiving a NACK message, modify the multicast chain accordingly and retransmit with the wavelength of the next hop; when the ACK message is not received after a time out, retransmit the multicast packet with the wavelength of the next hop without modifying the multicast chain.
- The transit nodes of the multicast packet perform in addition to the steps described above the following step:
   - Send a NACK message to the source node if the multicast packet is not received correctly and stop the multicast transmission to the next nodes in the multicast group.
- The last receiving node performs in addition to the steps described above the following step:
   - Send a NACK message to the source node if the multicast packet is not received correctly; send ACK to the source node if the multicast packet is received correctly.

In one embodiment, verifying correct reception of a multicast packet comprises converting the optical payload of said packet to an electrical form and performing, e.g., a cyclic redundancy check or evaluation of other error-detecting codes on the electrical form.

In one embodiment, stopping the multicast transmission means removing the multicast packet from the optical ring and not transmitting the packet further. This may according to one embodiment be done at the intermediate nodes if a packet is not received correctly, and/or at the final node, preferably independent of whether the packet was received correctly or not by the final node.

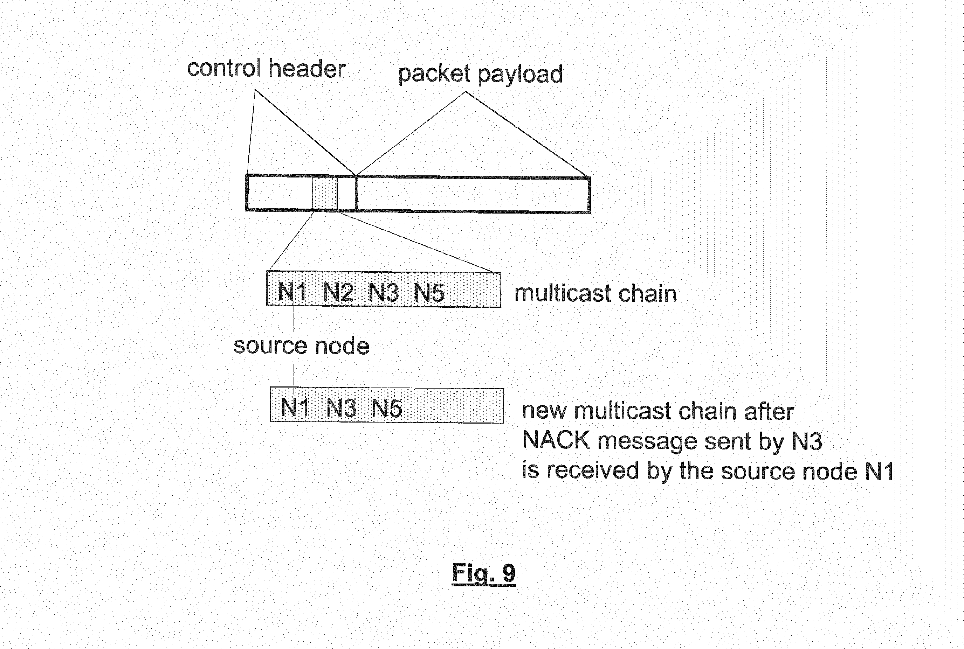

In the example illustrated in Fig. 2, node N1 sends a multicast packet to nodes N2, N3 and N5. If the packet is received correctly by all the nodes, node N5 sends an ACK message to the source node N1. If the packet is received correctly by node N2, however node N3 detects an error; in this case node N3 refrains from transmitting the multicast packet to the next node and sends a NACK message to the source node N1. The source node N1 will retransmit the multicast packet with a new multicast chain without the address of node N2, since node N2 has received the packet correctly in the first transmission. Fig. 9 illustrates the modification of a multicast chain in the control header of a multicast packet in the said case of a retransmission after reception of a NACK message.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed and have suitable interfaces and peripherals so as to act in accordance with the methods or modules explained in connection with embodiments of the invention.

An apparatus implementing an embodiment of the invention may e.g. comprise a computer, a router, a switch or any apparatus or combination of apparatuses which may act as an entity of an optical ring network or as a part thereof.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

## Claims

1. A method for performing a multicast transfer of a packet from a source node to a plurality of destination nodes in a packet optical ring network topology, where each node has an associated wavelength at which it is receiving packets, and wherein said packet comprises a control header and a payload, said method comprising:
• incorporating at said source node multicast chain information into said control header of said packet, said multicast chain information identifying said source node and said plurality of destination nodes thereby defining as said multicast chain a sequence of nodes to which said packet is to be sequentially transferred;
• transmitting said packet to the next node of said sequence of nodes which follows said source node using the wavelength of said next node;
• at each node of said sequence following said source node and in accordance with the order defined by said sequence performing the following:
• receiving said packet by said node and processing said control header to identify the subsequent node following said node according to said sequence of nodes; and
• if said processing results in a subsequent node being identified, transmitting said packet to said subsequent node using the wavelength of said subsequent node.

2. The method according to claim 1, wherein said step of processing the control header of said received packet comprises delaying the packet to allow for processing the control header, and
wherein the step of transmitting the packet to the subsequent node using the wavelength of said subsequent node comprises performing a wavelength conversion to convert the wavelength of the received packet to the wavelength of said subsequent node.

3. The method according to claim 1, wherein said step of processing said control header of said received packet comprises:
converting the packet from its optical to an electrical representation and buffering of the resulting packet its electrical representation, and
generating an optical representation of said packet based on said buffered electrical representation of said packet and transmitting said optical representation of said packet to said subsequent node using the wavelength of said subsequent node, preferably with high priority.

4. The method according to one of the preceding claims, wherein said step of processing the control header comprises removing the identification of the node where the processing is performed from the multicast chain defined in the control header.

5. The method according to one of the preceding claims, further comprising:
sending an ACK message only if the last node in said sequence of nodes has correctly received said packet, said ACK message being sent from said last node of said sequence to said source node.

6. The method according to one of the preceding claims, further comprising:
if a node in said sequence has not correctly received said packet, sending a NACK message from said node to said source node.

7. The method according to one of the preceding claims, further comprising:
if a NACK message is received by said source node, transmitting said packet again by said source node.

8. The method of claim 7, wherein said packet, before being transmitted again, is modified by modifying the multicast chain such that destination nodes that have previously successfully received the packet are removed from the chain to thereby transmit the packet again to only to those nodes of said sequence which have not yet correctly received it.

9. The method according to one of the preceding claims, further comprising:
if an ACK message is not received at said source node within a timeout period, transmitting said packet again.

10. The method according to one of the preceding claims, further comprising:
removing said packet from said optical ring network by the last node of said sequence of nodes, preferably after successful receipt of the packet; and/or
removing said packet from said optical ring network by a destination node of said sequence of nodes if said packet is not received correctly at said destination node.

11. An apparatus for performing a multicast transfer of a packet from a source node to a plurality of destination nodes in a packet optical ring network topology where each node has an associated wavelength at which it is receiving packets, and wherein said packet comprises a control header and a payload, said apparatus comprising:
• a module for incorporating at said source node multicast chain information into said control header of said packet, said multicast chain information identifying said source node and said plurality of destination nodes thereby defining as said multicast chain a sequence of nodes to which said packet is to be sequentially transferred;
• a module for transmitting said packet to the next node of said sequence of nodes which follows said source node using the wavelength of said next node;
• a module for, at each node of said sequence following said source node and in accordance with the order defined by said sequence, performing the following:
• receiving said packet by said node and processing said control header to identify the subsequent node following said node according to said sequence of nodes; and
• if said processing results in a subsequent node being identified, transmitting said packet to said subsequent node using the wavelength of said subsequent node.

12. A source node for performing a multicast transfer of a packet to a plurality of destination nodes in a packet optical ring network topology, where each node has an associated wavelength at which it is receiving packets, and wherein said packet comprises a control header and a payload, said source node comprising:
• a module for incorporating at said source node multicast chain information into said control header of said packet, said multicast chain information identifying said source node and said plurality of destination nodes thereby defining as said multicast chain a sequence of nodes to which said packet is to be sequentially transferred;
• a module for transmitting said packet to the next node of said sequence of nodes which follows said source node using the wavelength of said next node, to thereby enable the nodes of said sequence following said source node to respectively receive the packet, process the header to identify the subsequent node and transmit it to the identified subsequent node using the wavelength of said subsequent node.

13. A node for participating a multicast transfer of a packet to a plurality of destination nodes, in a packet optical ring network topology, where each node has an associated wavelength at which it is receiving packets, and wherein said packet comprises a control header and a payload, said node being one of said destination nodes and comprising:
• a module for receiving said packet by said node from its preceding node in said sequence, said packet having incorporated multicast chain information into its control header, said multicast chain information identifying said source node and said plurality of destination nodes thereby defining as said multicast chain a sequence of nodes to which said packet is to be sequentially transferred;
• a module for processing said control header to identify the subsequent node following said node according to said sequence of nodes; and
• if said processing results in a subsequent node being identified, transmitting said packet to said subsequent node using the wavelength of said subsequent node.

14. The apparatus of one of claims 11 to 13, further comprising:
a module for performing the steps according to one of claims 2 to 10.

15. A computer program comprising computer program code for enabling said computer to perform a method according to one of claims 1 to 10 or to act as an apparatus according to one of claims 11 to 14.
